# EUROPEAN PATENT APPLICATION

(11) **EP 4 088 859 A1**
(43) Date of publication of application: **16.11.2022**
(21) Application number: 21173575.8
(22) Date of filing: 12.05.2021
(51) Int. Cl.: B23P 6/00, B23K 9/04, E21B 17/10

(54) **METHOD FOR RE-HARDBANDING A TOOL JOINT OF A DRILL PIPE AND METHOD FOR PRECONDITIONING A TOOL JOINT OF A DRILL PIPE FOR A RE-HARDBANDING.**

(71) Applicant: Castolin Eutectic GmbH, 65830 Kriftel (DE)
(72) Inventor: LARSSON, Stor Bengt Gunnar, 4312 Sandnes (NO)
(74) Representative: Staudt, Armin Walter

(57) **Abstract**

In a known method of re-hardbanding a tool joint (3) of a drill pipe (1), the tool joint (3) has a worn weld deposit (4; 7; 14) that comprises a first metal layer (7), which is deposited at least partially into a groove (12) of the tool joint (3). In this cases re-hardbanding comprises the steps of: machining and/or grinding the worn weld deposit (4; 7; 14), preheating the tool joint (3) to a preheating temperature, and depositing at least one second metal layer (14) containing hardbanding material onto the ground metal deposit (4; 7; 14). In order to ensure that the base material is subjected to a low temperature during re-hardbanding, and at the same time, any problems due to mechanical stresses and the risk of cracks are reduced, it is suggested that the first metal layer comprises a layer (7) of non-hardenable steel.

## Description

### Technical field

The present a method for re-hardbanding a tool joint of a drill pipe for drilling holes and boreholes in underground formations.

Particularly, the invention relates to a method of re-hardbanding a tool joint of a drill pipe, said tool joint has a worn weld deposit that comprises a first metal layer, which is deposited at least partially into a groove of the tool joint, wherein re-hardbanding comprises the steps of:
(i) machining and/or grinding the worn weld deposit,
(ii) preheating the tool joint to a preheating temperature,
(iii) depositing at least one second metal layer containing hardbanding material onto the grinded and/or machined metal deposit.

Further, the invention relates to a drill pipe that is specially conditioned for the re-application of a hardbanding.

Particularly, the invention relates method of preconditioning a tool joint of a drill pipe for a re-hardbanding, the preconditioning treatment comprising
(a) cutting a groove into a base metal of the tool joint
(b) welding a metal deposit at least partially into the groove, comprising preheating the tool joint to a temperature in the region of 200 to 300°C, and depositing a first metal layer.

The drilling of holes or bores into underground formations and particularly, the drilling of oil and gas wells, is typically accomplished using an elongated drill string, which initially carries the drill bit or other cutting tool, and which is constructed from a number of sections of tubular drill pipe which are coupled at their ends via so-called "tool-joints". As the drill bit penetrates deeper or further into an underground formation, additional sections of drill pipe are added to the drill string.

It is conventional practice to line the wall of a bore hole with steel piping as the length of that bore hole progressively increases. This steel piping is generally known as a bore hole casing. The casing lines the bore to prevent the wall from caving in and to prevent seepage of fluids from the surrounding formations from entering the wellbore. The casing also provides a means for recovering the gas or the oil if the well is found to be productive.

A drill string is relatively flexible, thus being subject to lateral deflection. Especially at the regions of the tool-joints frequently contacts the surrounding bore hole casing, thereby inevitably causing frictional wear, increased shock and abrasion to itself, and similar wear or other damage to the surrounding casing. Additional wear and corrosion results from the abrasive slurry passing between the drill string and the casing even if they are not in direct contact.

In order to reduce frictional wear, the tool-joints of the drill pipes are usually provided with a protective coating called "hardbanding" or "hardband". It comprises a material which is applied in form of sprayed, welded or brazed overlays around the circumference of the tool-joint, to form annular hardbands. The heat produced by welding the hardbands causes heat to be conducted from the melt pool to the base metal. This area where the heat has been increased is called a "Heat Affected Zone" (HAZ). Within the HAZ the area closest to the weld rises over the austenitizing temperature of the steel and if the cooling rate is high enough this area transforms to martensite which is hard and brittle in nature unless heat treated afterwards. Martensite formation can also cause HAZ-cracking when hydrogen is present. Therefore, the common practice to prevent cracking and brittle martensite in general is preheating the piece before welding. This reduces the self-quenching effect of the work piece (heat conduction from the weld to the base metal) and thus prevent or reduce martensite formation and the adverse effects associated to it.

During utilization of the drill pipe, the hardband is subjected to mechanical stresses and abrasion. Since drill pipes are expensive tools, their hardbands are repaired if worn. During the repairing method the old hardbanding is removed in part or completely and a new layer of hardbanding material is applied. The repairing method is typically known as "re-hardbanding". During standard re-hardbanding a preheating of the tool joint base material (typically AISI 4137) is necessary, the temperature of which depends on the thickness of the tool-joint and which is typically about 288-316°C for a tool-joints with a size in the range of 7 to 7-3/8 inches. In the re-hardbanding process the so-called "interpass temperature" (which is the temperature that arises on the surface in the welding area between two subsequently applied weld beads) and subsequent temperature can rise up to around 350°C on the tool joint base material and resulting in damage on heat sensitive components and coatings like electronic components inside the drill pipe or an "Internal Polymer Coating" (in the following referred to as "IPC) which is usually applied onto the inside surface of the drill pipes.

The way to avoid damaging the normally used IPC in drill pipes is to keep the temperature as low as possible and keep the welding heat effect on the base material to not harm the IPC. This is so done by utilize a lower pre-heating temperature of about 150°C and in addition by cooling internally by air or air/water-mist during and after welding, also by pausing the welding Method during the application of subsequent weld-beads and wait until temperature is low enough. This Method will give a base temperature of about 200°C and less, and this is good enough for reducing/preventing the IPC coating. Lower than this temperature could negatively affect the bonding of hardbanding to the base metal and the metallurgical properties of the tool joint and cause brittleness in the HAZ (Heat Affected Zone) under the hardbanding.

### Prior art

To solve this problem, the US 10,267,101 B2 proposes that a groove is cut in a base metal of the tool joint of a new drill pipe. Then a weld bead of hardband metal deposit is welded partly into the groove. The weld bead may be in the form of a weave weld bead. This welding creates a first heat affected zone (HAZ) in the base metal. When the tool joint is worn the remainder of the previously applied hardband metal is grinded and a consumable metal wire is arc welded onto it. This weld is in the form of a stringer weld bead. This creates a second heat affected zone at a depth external to the first HAZ. This allows the preheat temperature to be reduced so that the surface temperature of the tool joint is between about 10°C and about 77°C and the amount of heat introduced into the tool joint when re-applying the hardband is low.

### Object of the invention

In the known process, the stringer weld bead beads applied to the worn hardbanding material are much thinner than the originally applied weave weld beads. This is one of the reasons why the surface temperature of the tool-joint can be significantly reduced during re-hardbanding. However, despite this reduction in surface temperature, problems can still arise due to mechanical stresses and the associated risk of cracks.

It is the object of the present invention to provide a method for re-hardbanding a tool joint of a drill pipe in which the base material is subjected to a low temperature and at the same time, the problems due to mechanical stresses and the risk of cracks are reduced.

In addition, it is an object of the invention to provide a method for preconditioning a tool joint of a drill string so that the hardbanding can easily and cost-effectively be repaired

### Summary of the invention

Starting from the above-mentioned drill pipe, this object is achieved according to the invention in that the first metal layer comprises a layer of non-hardenable steel.

According to the invention, the steps of machining and/or grinding the worn weld deposit, preheating the tool joint to a preheating temperature, and depositing at least one second metal layer containing hardbanding material onto the ground and/or machined metal deposit are performed only if the tool-joint of the drill pipe is such that the first metal layer comprises a layer of non-hardenable steel. This must be verified before carrying out the re-hardbanding process. This is because in cases where the first metal layer does not consist of a layer of non-hardenable steel, the re-hardbanding process according to the invention is not applicable.

Usually, the base material of the of the tool-joint is made of a hardenable, high-carbon steel. The first metal layer made of non-hardenable steel is metallurgically bonded to the base material. Thereby, a heat affected zone is created in the base material. For hardbanding (or re-hardbanding) a second layer is provided on top of the first layer. So, the first metal layer is located between the base material of the tool joint and the second metal (hardbanding) layer.

The first metal layer of non-hardenable steel has a low hardness compared to the hardness of the hardbanding layer and the base metal. Due to its relatively low hardness, the first metal layer acts like a buffer layer, which is suitable for reducing mechanical stresses inside the hardbanding and thereby preventing cracks. The combination of an upper hard layer on a lower hard layer - as in the prior art - is avoided.

The typical welding process for hardbanding and re-hardbanding is arc welding. In this context the term "non-hardenable steel" means that the hardness of the steel is not increased by temperatures and cooling rates normally associated with arc welding the second layer onto the first layer.

During use of the drill string, the hardband weld deposit of the tool joint wears off, necessitating re-hardbanding. This means, the renewed application of a second, metal (hardband) layer to the first metal layer. When the second metal layer is arc-welded to the first metal layer, the hardness of the non-hardenable steel is not increased and there is essentially no metallurgical effect on the base material. Especially, welding the second layer does not create an additional heat affected zone neither in the base material nor in the metallurgical bonding of the second layer. The re-hardbanding according to the invention does not require a further post weld heat treatment and preheating and interpass temperatures are low. Therefore, the inventive method reduces the likelihood that the IPC or electronic components are negatively affected.

In the simplest case, the first metal layer is disposed directly on the surface of the tool joint. Alternatively, the first metal layer can itself be disposed onto another intermediate layer. The deposition of the at least one second metal layer is on the first metal layer is preferably performed in such a way that an edge zone of the first metal layer remains uncovered on both sides of the second metal layer, where each edge zone has a width of at least 8 mm, preferably a width of at least 10 mm.

The width of the second metal layer is smaller than the width of the first metal layer. Therefore, uncovered edge zones of the first metal layer remain on both sides of the second metal layer. These edge zones prevent contact between the second metal layer and the base material. Such contact would have a negative effect on the base material, e.g. by generating an additional HAZ. In addition, the edge zones also provide a distance between the HAZ in the base material and the hard hardbanding material. In the known method explained above, also a contact occurs between the HAZ in the base material and a new HAZ generated by applying of the second metal layer. This effect is also prevented by the first metal layer made of non-hardenable austenitic steel and by the leaving the edges zones on both sides of the second metal layer. This also helps to reduce stresses and cracks.

The thickness of the first metal layer affects the properties of the second metal layer (hardband). The thickness of the first metal layer must be large enough to avoid the formation of a heat affected zone in the base material during re-hardbanding. Preferably, the first metal layer is as thick as the heat affected zone would be, if induced by direct application of the re-hardbanding material. For this purpose, it is advantageous if the layer of non-hardenable steel has a thickness in the range of 3 to 8mm, preferably in the range of 4 to 6mm.

The first metal layer of non-hardenable steel is preferably made of an austenitic stainless steel.

Austenitic stainless steel is not hardenable by temperature alone. It is a smooth and ductile material compared to the hardbanding material, so it serves as a buffer layer located between the base material and the second metal (hardband) layer. Usually, the second metal (hardband) layer shows a good adherence to the buffer layer of stainless steel.

The austenitic stainless steel is a Fe based alloy which preferably comprises (in wt.-%):

| | | | |
|---|---|---|---|
| C | 0,0 | - | 0,5 |
| N | 0,0 | - | 2,0 |
| Si | 0,1 | - | 1,2 |
| Cr | 18,0 | - | 25,0 |
| Co | 0,0 | - | 10,0 |
| Ni | 8,0 | - | 15,0 |
| Mn | 0 | - | 9,5 |
| Fe | Balance | | |

In order to achieve a sufficient thickness of the first metal layer, the layer may comprise several sub-layers. The sub-layers are applied layer-by-layer by a common welding procedure. They may be welded either manually or automatically. In a preferred modification the first metal layer comprises at least two sublayers which are applied by multi-layer welding. Preferably, each of the sub-layers has a thickness in the range of 1 to 7mm, more preferably in the range of 2 and 5mm.

The preheating temperature in the method step (ii) is preferably set in a range of 20 to 150°C, more preferably in a range of 30 to 80°C, and most preferably to a temperature in the range of 40 to 60°C.

These preheating temperatures are low enough to prevent temperature rise above a temperature sufficient to damage any heat sensitive components like electronics and coatings like an IPCs on the inside wall of the drill pipe.

Subsequent applications of weld beads arise the temperature of the base material. The "interpass temperature" is the temperature that arises between two subsequent applied weld beads. In order to avoid that the subsequent temperature rises up to around 350°C on the tool-joint base material, it should be as low as possible.

It was found to be sufficient that an interpass temperature at the beginning of depositing the at least one second metal layer is less than 150°C, preferably less than 130°C, more preferred less than 110°C and most preferred less than 90°C..

The repair of the tool-joint is carried out before the hardband layer is completely worn off. Generally, the previously applied layer of non-hardenable metal remains completely intact. The hardband material remains therefore above the remaining surface of the tool joint. Preferably, the grinding of the worn weld deposit is performed such that at least a portion of the ground back surface is 1mm or less above an adjacent surface of the tool joint. Most preferred, the grinding of the worn weld deposit is performed such that the ground back surface is less than 0.5mm above or equal to the adjacent surface of the tool joint. A part of the previous hardbanding layer may remain in intact condition.

In particular, in case that the previously applied layer of non-hardenable metal is found to be degraded at the beginning of the repair-process, it has been shown to be advantageous that prior to applying the at least one second metal layer a metal sublayer of non-hardenable steel is deposited onto the first metal layer. The metal sublayer of non-hardenable steel is preferably a thin layer with a layer thickness of less than 2mm.

With regard to a low temperature input when producing the hardbanding layer, it has proven to be particularly advantageous when the at least one second metal layer is welded in parallel bands, said bands have a band width of 12.7mm (0,5 inches) or less, and preferably said bands have a band width of 6.4 mm (0,25 inches) or less.

The smaller the belt width, the lower the temperature input required to create the hardbanding layer

The deposition of the at least one second metal layer is preferably performed by a welding process that controls the arc to provide low heat input.

Such welding processes are based on short-arc methods, e.g., known as cold metal transfer (CMT) process, cold arc method, or TAWERS

Welding machines for performing the CMT process are presently provided for example by Fronius International GmbH Business Unit Perfect Welding, Austria. Cold arc welding machines are provided by EWM AG, Germany, and the TAWERS process by Panasonic Industry Europe. Generally, these processes are based on MIG/MAG welding which is characterized by the fact that a consumable wire electrode is supplied, so that the arc can burn between the wire electrode end and the workpiece. The diameter of the wire electrode is preferably smaller than 1.5mm, e. g. the diameter is 1.2mm. The MIG process uses a shielding gas that flows out of a shielding gas nozzle.

Although the use of a cooling medium is not required, it may be preferably that the deposition of the at least one second metal layer is performed by internally cooling the drill pipe using an air-cooling lance with water mist additive. The cooling decreases the interpass temperatures and increases the cooling rates after arc welding to ensure that the metal in the tool joint achieves the proper metallurgical phase profile. Cooling fluid such as water and pressurized air can be optionally used to control the temperature of the cooling phase.

With regard to the process for preconditioning a tool joint of a drill string for re-hardbanding, the above-mentioned task is solved starting from a preconditioning method of the generic type in that the first metal layer comprises a layer of non-hardenable steel.

Usually, the base material of the of the tool-joint is made of a hardenable, high-carbon steel. The preconditioning of the tool joint requires providing a metal layer made of non-hardenable steel that is metallurgically bonded to the base material. Welding of the first metal layer creates a heat affected zone in the base material. For the first hardbanding a second layer is provided on top of the first layer. So, the first metal layer is located between the base material of the tool joint and the second metal (hardbanding) layer.

During use of the drill string, the first hardband weld deposit of the tool joint wears off, necessitating re-hardbanding. This means the renewed application of a second, metal (hardband) layer to the first metal layer. When the second metal layer is arc-welded to the first metal layer, the hardness of the non-hardenable steel is not increased and there is essentially no metallurgical effect on the base material. Especially, welding the second layer does not create an additional heat affected zone neither in the base material nor in the metallurgical bonding of the second layer. Therefore, the tool-joint that is preconditioned according to the invention allows a re-hardbanding which does not require a further post weld heat treatment. Therefore, the preconditioned tool-joint reduces the likelihood that heat sensitive components like an IPC or any electronics inside the tool tube are negatively affected during subsequent re-hardbanding.

The first metal layer of non-hardenable steel is preferably made of an austenitic stainless steel.

Austenitic stainless steel is not hardenable by temperature alone. It is a smooth and ductile material compared to the hardbanding material, so it serves as a buffer layer located between the base material and the second metal (hardband) layer. Usually, the second metal (hardband) layer shows a good adherence to the stainless steel buffer layer.

The austenitic stainless steel is a Fe based alloy which preferably comprises (in wt.-%):

| | | | |
|---|---|---|---|
| C | 0,0 | - | 0,5 |
| N | 0,0 | - | 2,0 |
| Si | 0,1 | - | 1,2 |
| Cr | 18,0 | - | 25,0 |
| Co | 0,0 | - | 10,0 |
| Ni | 8,0 | - | 15,0 |
| Mn | 0 | - | 9,5 |
| Fe | Balance | | |

The thickness of the first metal layer affects the properties of the second metal layer (hardband). The thickness of the first metal layer must be large enough to avoid the formation of a heat affected zone in the base material during re-hardbanding. Preferably, the first metal layer is as thick as the heat affected zone would be, if induced by direct application of the re-hardbanding material.

The first metal layer is as thick and as large as necessary to ensure that the heat-affected zone, if induced by direct application of the hardbanding material, would be located entirely within the first metal layer. For this purpose, it is advantageous if the layer of non-hardenable steel has a thickness in the range of 3 to 8 mm, preferably in the range of 4 to 6 mm.

In order to achieve a sufficient thickness of the first metal layer, the layer may comprise several sub-layers. In this case, the welding of the metal deposit comprises a first deposition step and a second consecutive deposition step. The sub-layers may be applied layer-by-layer by a common welding procedure. They may be welded either manually or automatically, preferably separated by a cleaning process (in the following also referred to as "clean weld"). Preferably, in the first deposition step a lower metal sub-layer is deposited that has a thickness in the range of 2 to 4mm, and that in the second deposition step an upper metal sub-layer is deposited that has a thickness in the range of 2 to 4mm.

In a preferred modification of the preconditioning treatment the interpass temperature at the beginnings of the first and second deposition steps is less than 400°C, preferably less than 380°C. It has been shown that such a low interpass temperature does not affect the heat-sensitive components inside the pipe.

### Detailed description

Preferred embodiments of the present invention can be understood with reference to the following drawings. The components in the drawings are not necessarily to scale.
- **Fig. 1**: illustrates a side view of a drill pipe with a hardbanded tool-joint,
- **Fig. 2**: shows an arrangement of a drill pipe according to the invention in a bore hole casing,
- **Fig. 3**: is a sectional drawing of a hardbanding zone in accordance with the principles of the invention,
- **Fig. 4**: is a process flow diagram of a process for making a drill pipe having a tool-joint which is pre-conditioned for application and especially for re-application of hardbanding,
- **Fig. 5**: is a process flow diagram of a process for reapplication of hardbanding, according to a first preferred embodiment of the present invention, and
- **Fig. 6**: is a process flow diagram of a process for reapplication of hardbanding, according to a second preferred embodiment of the present invention.

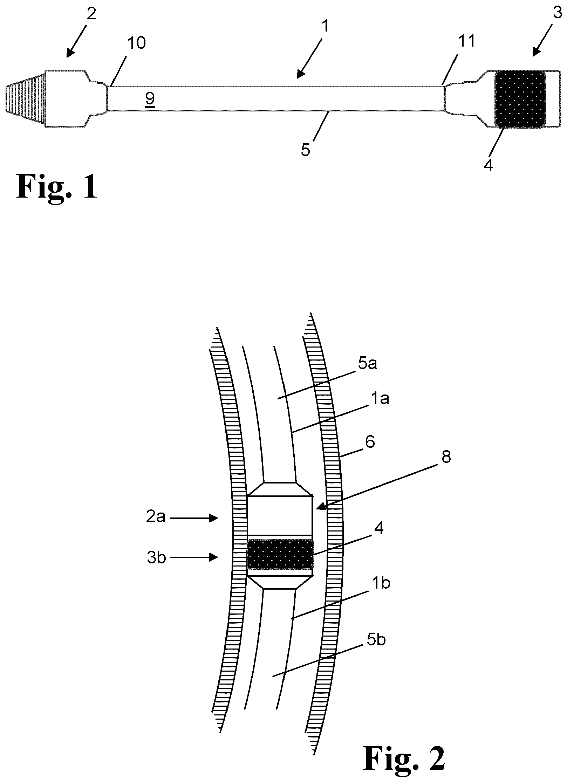

**Fig. 1** illustrates a drill pipe section 1 of a drill pipe which is used in drilling for oil or gas. The drill pipe section 1 comprises a center tube 5 having two end sections. The first end section 10 of the center tube 5 is joined to a pin tool-joint 2 and the second end section 11 is joined to box-end tool-joint 3 by friction welding. The center tube 5 as well as the tool joints 2, 3 are made of common hardenable mild steel (AISI 4137).

The drill pipe section 1 comprises a bore 9 and centre inner surface (not shown), which is coated with a polymer/plastic coating for protection of corrosion. The polymer coating is applied by spraying and is subsequently fused in an oven.

The tool-joints 2, 3 of the drill pipe section 1 are provided with a hardbanding zone 4.

In **Fig. 2** schematically illustrates a drill pipe 8 according to the invention arranged in a casing 6 and comprising two drill pipe sections 1a, 1b, whereby the box-end tool-joint 3b of the first drill pipe section 1b is joined to the pin tool-joint 2a of the second drill pipe section 1a. As described in Fig. 1, the box-end tool-joint 3b is coated with a hardbanding zone 4.

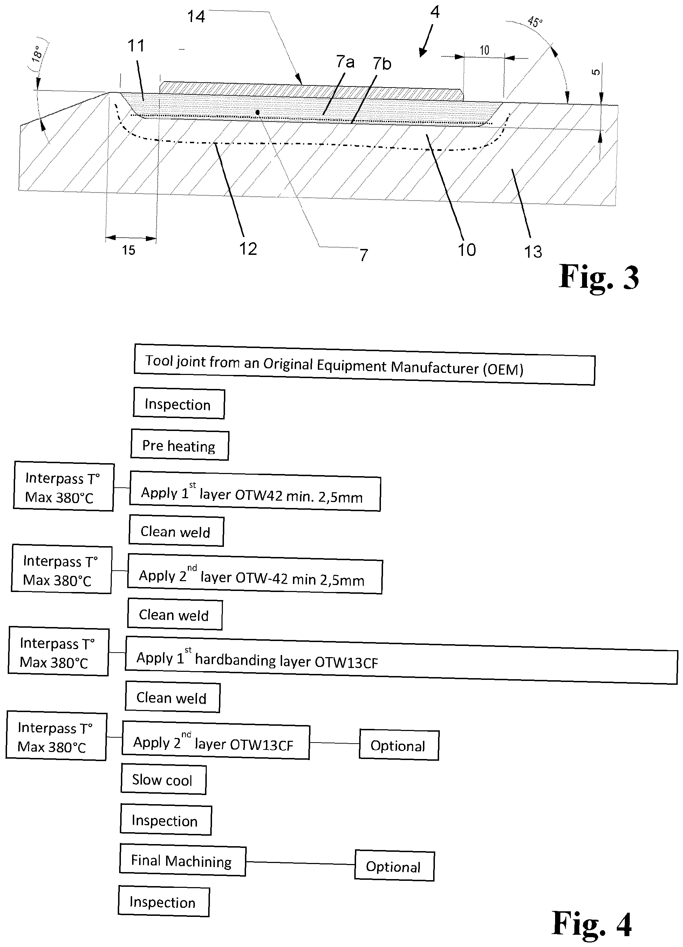

**Fig. 3** illustrates more details of the hardbanding zone 4. The drill pipe wall consists of a base material 13, which is made of common mild steel (AISI 4137). The hardbanding zone 4 is disposed on the base material 13 of the drill pipe tubing. It comprises a first layer 7 made of stainless austenitic steel and a second layer 14 of hardbanding material.

The ductile first layer 7 of austenitic stainless steel is disposed inside a groove 10 cut into the base material 13. It has a hardness of about 200 HV10 and disposed by multi-layer welding. It consists of two partial layers 7a, 7b of austenitic stainless steel, which is commercially available from Castolin GmbH under the trade name "OTW42". Its chemical composition in weight-%: max. 0.1% C, 0.6% Si, 6% Mn, 18% Cr, 8% Ni, balance Fe. Each sublayer 7a, 7b has a thickness of 2.5mm, so that the total thickness of the first layer 7 is 5mm and its maximum width is about 95mm.

The second layer 14 consists of a hardbanding material, which is commercially available from Castolin GmbH under the trade name "OTW 13CF". It has the following chemical composition in weight-%: 1.41% C, 0.01% S, 1.43% Si, 6.10% Ti, 5.03% Cr, 1.03% Mn, 1.30% Mo, balance Fe. It has a thickness of 2 mm and a hardness of about 500 HV10. The second layer 14 has a width of about 75mm and it does not completely cover the first layer 7, but leaves a free strip area 11 on both sides with a width of 10 mm. So that the second layer 14 has no contact to the base material 13.

The layers 7, 14 are applied by an arc welding procedure, so that heat is transferred to the base material 13 and a heat affected zone 12 (HAZ) is formed. The heat affected zone 12 is indicated in Fig. 3 by a dashed line. The dimensions are given in the unit "mm".

### Procedure A - Primary hardbanding including a pre-conditioning for a re-hardbanding process

A summary of Procedure A according to an embodiment of the present invention is shown with reference to the flow diagram in Fig. 4. In a first step of pre-conditioning for a re-application of hardbanding, a drill pipe made of mild steel (AISI 4137) with a tool joint is either is provided by an original equipment manufacturer or a used drill pipe is rebuilt. In any case the new or rebuilt drill pipe is modified by machining a groove 10 with a depth of 5mm and a width of 10mm under the position of the desired hardband. In one embodiment the method includes the optional step of inspecting the tool joint with the recessed groove 10. The method includes pre-heating the tool joint so the surface is at a temperature in the range of about 200 to 300°C, depending on the material of the tool-joint and the wall thickness d and the outer diameter (OD) of the tool-joint. Table 1 gives an orientation for the pre-heating temperature.

**Table 1**

| **Tool Joint OD (inches)** | **Typical wall thickness d (mm)** | **Preheating temperature (°C)** |
|---|---|---|
| 5^{1/2} to 6^{1/4} | 34 - 40 | 225 - 248 |
| 6^{5/8} to 6^{7/8} | 42 - 46 | 250 - 253 |
| 7 to 8^{1/2} | 44 - 53 | 252 - 265 |

In the present examples, the tool joints have an outside diameter of 15.5cm (6^{1/2} inches). As a next step in pre-conditioning for a re-application of hardbanding, a first sub-layer 7a of an austenitic stainless steel (OTW42) is deposited inside the groove 10 using a standard welding procedure. Subsequently to a clean step, a second sub-layer 7b of the same austenitic stainless steel (OTW42; chemical composition in weight-%: max. 0.1% C, 0.6% Si, 6% Mn, 18% Cr, 8% Ni, balance Fe) is deposited onto the first sub-layer and inside the groove 10, optionally followed by a further clean weld. The first and second sub-layer (7a; 7b) each have a thickness of 2.5mm. When applying the first and second sub-layer (7a; 7b), the maximum temperature (interpass temperature "Interpass T°") is kept below 380°C. The first sub-layer 7a and the second sub-layer 7b together form the buffer layer 7 of austenitic stainless steel.

This completes essential steps for preconditioning the tool joint for reapplication of the hardbanding in the future. However, the completion of a functioning tool joint requires that a hardbanding layer 14 be applied on top of the buffer layer 7 of austenitic stainless steel. The hardbanding layer 14 is deposited on the buffer 7 in such a way that an edge zone 11 of the buffer layer 7 remains uncovered on both sides of the hardbanding layer 14, where each edge zone 11 has a width of about 10 mm.

By the arc-welding procedure heat is transferred to the base material. Therefore, after welding, the region of the base material 13 closest to the welded layers (4; 7; 14) is affected by the heat and forms a heat affected zone 12. The heat affected zone often has a microstructure different from the base material and often it becomes brittle 12 and less ductile. This may result in the formation of cracks and a low impact resistance of the drill pipe in this region. Afterwards, the drill pipe is cooled down slowly. Optionally, the welding deposits (4; 7a, 7b, 14) are inspected, finally machined if necessary, and inspected again. Finally, a polymer layer is applied on the inner surface of the drill pipe.

### Procedure B1 -1^{st} variant of the procedure for re-hardbanding a worn tool-joint

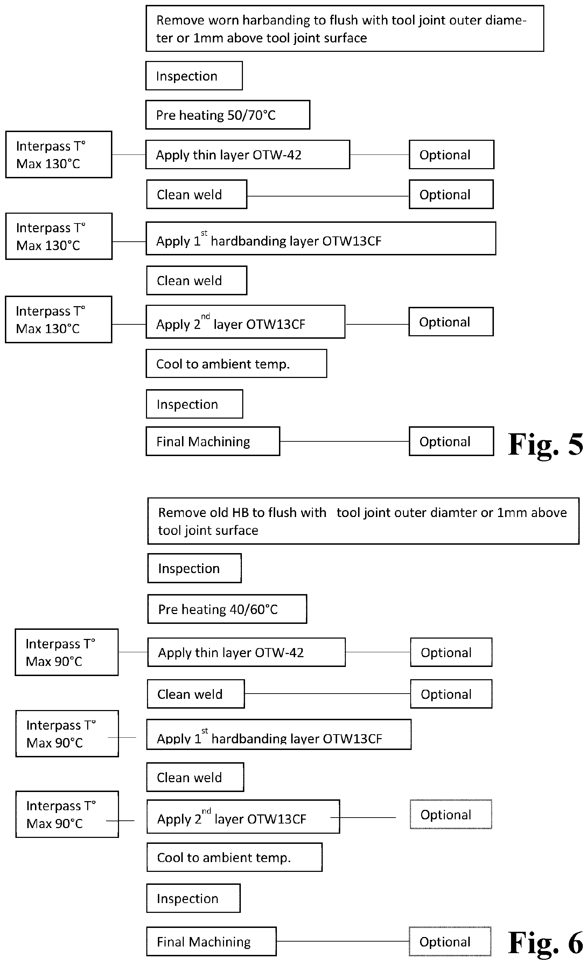

A summary of a re-application procedure according to a first variant is shown with reference to the flow diagram in Fig. 5. In the following this procedure is referred to as "Super Low Heat-Input Hardbanding Application" (in short: "SLHHA"). In this SLHHA procedure, the maximum heat input during welding is 130°C.

The procedure starts with an optional step of inspecting the tool joint with worn hardbanding that was originally or previously applied to the tool-joint. A further step is grinding the worn hardbanding such that the ground surface can be flush to the outer diameter of the tool joint.

Grinding means a process of removing the surface of a material using an abrasive powder or a tool made form an abrasive powder or covered with an abrasive powder embedded in a binder. In addition or supplementary, the surface can also be removed by machining. Machining is the process of cutting, shaping, or removing flakes of the material from a workpiece using a machine tool.

Afterwards, the grinded surface area is machined so that a smooth surface is obtained. It must be ensured that the existing but worn hardbanding still has a first layer 7 of austenitic steel as explained above. The thickness of the austenitic steel layer must be at least 4mm. In that case, the worn tool-joint is appropriate for the deposition of a new hardbanding layer. Otherwise, the procedure for re-hardbanding would not lead to a satisfactory result. In the event that a first layer 7 of austenitic steel is actually present but is damaged or too thin (for example, thinner than 4 mm), a further layer of austenitic steel must first be applied to the existing first layer. This additional layer to be applied will usually be thin, for example thinner than 2 mm. The total thickness of the existing first layer 7 and the additional new layer is less than 8mm, preferably not more than 6mm and most preferred it is around 5mm.

In case that a further layer of austenitic stainless steel (OTW-42) shall be deposited, the tool-joint shall be pre-heated to temperature in the range of 50 to 70°C, wherein the maximum interpass temperature is less than 130°C.

After an optional clean weld, a new hardbanding layer 14 is deposited. In the SLHHA procedure, the surface of the tool-joint is preheated to a temperature of 50 to 70°C. The hardbanding material OTW13CF is applied by Pulsed arc welding. The welding wire has the following chemical composition in weight-%: 1.41% C, 0.01% S, 1.43% Si, 6.10% Ti, 5.03% Cr, 1.03% Mn, 1.30% Mo, balance Fe. A weave weld bead is applied while the weld torch is oscillated along the surface parallel to the longitudinal axis of the tool joint. The oscillation motion is such that the welding wire is deposited to achieve the specified width of the hardbanding. Using wide weaving reduces the cooling rate of the weld metal making it more ductile.

In a modification of the SLHHA procedure, instead of the weave weld bead a stringer weld bead is applied while the weld torch is not or only slightly oscillated, preferably, the oscillation has an amplitude of less than 5mm, e.g. 3mm. The resulting stringer weld bead forms more or less straight parallel bands with a bandwidth of about 12.7mm (0,5 inches).

During the SLHHA procedure, an annular layer 14 of hardbanding material is welded onto the buffer layer 7 of austenitic steel so that an edge zone 11 with a free surface of austenitic steel protrudes on both sides of the annular layer 14. This ensures that the base metal 13 does not come into contact with the welded hardbanding material. In the embodiment, the buffer layer 7 has a width of 95mm and the annular layer has a width of 75mm. The width of each edge zone 11 is about 10mm.

In this case, the heat from the welding process is mainly transferred to the buffer layer 7 of austenitic stainless steel. Since this is a non-hardenable material, the properties of the buffer layer 7 are not or only slightly affected by the low welding heat, so that post-weld heat treatment is not required in this case. Since the base metal 13 is not affected, the preheating temperature can be lower than usual (see Table 1) and a low temperature of 50 to 70°C is sufficient for the tool-joint having an outside diameter of 6^{1/2} inches. For the same reason, a post weld heat treatment is not necessary, so that any existing polymer coating cannot be damaged.

Optionally, in particular to reduce the interpass temperature, the new hardbanding layer 14 can be deposited as two successive partial layers. In this case, a second layer of OTW13CF is deposited on the first layer by Pulsed arc welding after an optional clean weld.

Afterwards, the drill pipe is cooled to room temperature. Optionally, the welding deposits are inspected, finally machined if necessary, and inspected again. The resulting re-hardbanded tool-joint looks essentially like the original joint 4 shown in Fig. 3.

### Procedure B2 - 2nd variant of the procedure for re-hardbanding a worn tool-joint

A summary of a re-application procedure according to a second variant is shown with reference to the flow diagram in Fig. 6. In the following this procedure is referred to as "Ultra Low Heat-Input Hardbanding Application" (in short: "ULHHA"). In the ULHHA procedure, the maximum heat input during welding is 90°C.

The procedure starts with an optional step of inspecting the tool joint with worn hardbanding that was originally or previously applied to the tool-joint. A further step is grinding and/or machining the worn hardbanding such that the ground surface can be flush to the outer diameter of the tool joint. Afterwards, the grinded surface area is machined so that a smooth surface is obtained. It must be ensured that the existing but worn hardbanding still has a first layer 7 of austenitic steel as explained above. The thickness of the austenitic steel layer must be at least 4mm. In that case, the worn tool-joint is appropriate for the deposition of a new hardbanding layer. Otherwise, the procedure for re-hardbanding would not lead to a satisfactory result. In the event that a first layer 7 of austenitic steel (buffer layer) is actually present but is damaged or too thin (for example, thinner than 4 mm), a further layer of austenitic steel must first be applied to the existing first layer. This additional layer to be applied will usually be thin, for example thinner than 2 mm. The total thickness of the existing first layer 7 and the additional new layer is less than 8mm, preferably not more than 6mm and most preferred it is around 5mm.

In case that a further layer of austenitic stainless steel (OTW-42) shall be deposited, the tool-joint shall be pre-heated to temperature in the range of 40 to 60°C, wherein the maximum interpass temperature is less than 90°C.

After an optional clean weld, a new hardbanding layer 14 is deposited. The surface of the too-joint is preheated to a temperature of 40 to 60°C. The hardbanding material OTW13CF is applied by CMT arc welding. For this purpose, a relatively thin welding wire with a diameter of 1.2mm is used. A stringer weld bead is applied while the weld torch is not oscillated. The stringer weld bead forms more or less straight line with a line-width of 6.4mm (0,25 inches). It may be necessary to create multiple parallel weld lines to achieve the specified hardbanding width. A small oscillating movement of the welding torch can be used to overlap adjacent lines of the stringer weld bead to ensure a smooth transition and joint between the weld beads. The oscillating movement has an amplitude of less than 5mm, e.g. 3mm. The welding wire has the following chemical composition in weight-%: 1.41% C, 0.01% S, 1.43% Si, 6.10% Ti, 5.03% Cr, 1.03% Mn, 1.30% Mo, balance Fe.

During the ULHHA procedure, an annular layer 14 of hardbanding material is welded onto the buffer layer 7 of austenitic steel so that an edge area 11 with a free surface of austenitic steel protrudes on both sides of the annular layer 14. This ensures that the base metal 13 does not come into contact with the welded hardbanding material. In the embodiment, the buffer layer 7 has a width of 95mm and the annular layer has a width of 75mm. The width of the strip 11 is about 10mm.

In this case, the heat from the welding process is mainly transferred to the buffer layer 7 made of austenitic stainless steel. Since this is a non-hardenable material, the properties of the buffer layer 7 are not or only slightly affected by the low welding heat, so that post-weld heat treatment is not required in this case. Since the base metal 13 is not affected, the preheating temperature can be lower than usual (see Table 1) and a low temperature of 40 to 60°C is sufficient for the tool-joint having an outside diameter of 6^{1/2} inches. For the same reason, a post weld heat treatment is not necessary, so that any existing polymer coating or any other heat-sensitive component inside the drill pipe cannot be damaged.

Optionally, in particular to reduce the interpass temperature, the new hardbanding layer 14 can be deposited as two successive partial layers. In this case, a second layer of OTW13CF is deposited on the first layer by the same CMT arc welding process as it was used for welding of the first layer.

Afterwards, the drill pipe is cooled to room temperature. Optionally, the welding deposits are inspected, finally machined if necessary, and inspected again. The resulting re-hardbanded tool-joint looks essentially like the original joint 4 shown in Fig. 3.

The following table 2 compares the essential features of the prior art re-hardbanding method with the two variants of the method according to the invention, SLHHA and ULHHA, explained in more detail above.

**Table 2**

| | **Prior art** US 10,267,101 B2 | **SLHHA** | **ULHHA** |
|---|---|---|---|
| **Application** | Re-hardband | Re-hardband | Re-hardband |
| **Pre-condioning required** | Previously applied hardband layer in a groove | Previously applied 5mm thick OTW42 (austenitic steel) in a groove | Previously applied 5 mm thick OTW42 (austenic steel) in a groove |
| **Lateral dimensions of original layer and re-applied hardband layer** | No lateral differences; no free edge zone | Free edge zone of at least 8mm | Free edge zone of at least 8mm |
| **Preheating temperature** | Low (10-77°C) | Low (50 - 70°C) | very low (max. 50°C) |
| **Weld parameters** | DCEP/DCEN | Pulsed MIG process | CMT welding |
| **Number of beads (for a 3" hardband)** | Thin bands (1/3" wide) | Thin bands (max 1/2" wide) | Very thin bands (max 1/4" wide) |
| **Cooling internal** | Air/Water mist - optional | Air/Water mist - optional | Air/Water mist - optional |
| **Outer surface** | 77°C | max 120-150°C | max 90°C |
| **Inner surface** | | max 100-120°C | max 80°C |
| **Slow cool after welding required** | Yes | No | No |
| **IPC coating affected** | No damage | No damage | No damage |
| **Mechanical stresses** | Hardband layer on hard original layer | Hardband on soft buffering layer | Hardband on soft buffering layer |

Thereby mean:
- OTW42: austenitic stainless steel available from Castolin GmbH
- DCEP: direct current electrode positive
- DCEN: direct current electrode negative
- MIG: Metal Inert Gas welding
- CMT: Cold Metal Transfer welding

## Claims

1. A method of re-hardbanding a tool joint (3) of a drill pipe (1), said tool joint (3) has a worn weld deposit (4; 7; 14) that comprises a first metal layer (7), which is deposited at least partially into a groove (12) of the tool joint (3), wherein re-hardbanding comprises the steps of:
(i) machining and/or grinding the worn weld deposit (4; 7; 14),
(ii) preheating the tool joint (3) to a preheating temperature,
(iii) depositing at least one second metal layer (14) containing hardbanding material onto the ground metal deposit (4; 7; 14),
**characterized in that** the first metal layer comprises a layer (7) of non-hardenable steel.

2. Method of claim 1, **characterized in that** the non-hardenable steel is an austenitic stainless steel, preferably the austenitic stainless steel is a Fe based alloy comprising (in wt.-%):
| | | | |
|---|---|---|---|
| C | 0,0 | - | 0,5 |
| N | 0,0 | - | 2,0 |
| Si | 0,1 | - | 1,2 |
| Cr | 18,0 | - | 25,0 |
| Co | 0,0 | - | 10,0 |
| Ni | 8,0 | - | 15,0 |
| Mn | 0 | - | 9,5 |
| Fe | Balance | | |

3. Method according to any of the preceding claims, **characterized in that** the layer (7) of non-hardenable steel has a thickness in the range of 3 to 8mm, preferably in the range of 4 to 6mm.

4. Method according to any of the preceding claims, **characterized in that** the pre-heating temperature is set in a range of 20 to 150°C, preferably in a range of 30 to 80°C. most preferably to a temperature in the range of 40 to 60°C.

5. Method of any of the preceding claims, **characterized in that** an interpass temperature at the beginning of depositing the at least one second metal layer (14) is less than 150°C, preferably less than 130°C, more preferred less than 110°C and most preferred less than 90°C

6. Method according to any of the preceding claims, **characterized in that** the at least one second metal layer (14) is deposited on the first metal layer (7) in such a way that an edge zone (11) of the first metal layer (7) remains uncovered on both sides of the second metal layer (14), where each edge zone (11) has a width of at least 8 mm, preferably a width of at least 10 mm.

7. Method according to any of the preceding claims, **characterized in that** the grinding of the worn weld deposit (4, 7, 14) is performed such that at least a portion of the ground back surface is 1 mm or less above an adjacent surface of the tool joint (3).

8. Method according to any of the preceding claims, **characterized in that** prior to applying the at least one second metal layer (14) a metal sublayer of non-hardenable steel is deposited onto the first metal layer.

9. Method according to any of the preceding claims, **characterized in that** the at least one second metal layer is welded in parallel bands, said bands have a band width of 1.27cm (0,5") or less, and preferably said bands have a band width of 0.64cm (0,25") or less.

10. Method according to any of the preceding claims, **characterized in that** the deposition of the at least one second metal layer is performed by internally cooling the drill pipe (1) using an air-cooling lance with water mist additive.

11. Method of preconditioning a tool joint (3) of a drill pipe (1) for a re-hardbanding, the preconditioning treatment comprising
(a) cutting a groove (12) into a base metal (13) of the tool joint (3),
(b) welding a metal deposit (4; 7; 14) at least partially into the groove, comprising preheating the tool joint (3) to a temperature in the region of 200 to 300°C, and depositing a first metal layer (7) at least partially into the grove (12),
**characterized in that** the first metal layer comprises a layer (7) of a non-hardenable steel.

12. Method of preconditioning according to claim 11, **characterized in that** the non-hardenable steel is an austenitic stainless steel, preferably an
austenitic stainless steel is a Fe based alloy comprising (in wt.-%):
| | | | |
|---|---|---|---|
| C | 0,0 | - | 0,5 |
| N | 0,0 | - | 2,0 |
| Si | 0,1 | - | 1,2 |
| Cr | 18,0 | - | 25,0 |
| Co | 0,0 | - | 10,0 |
| Ni | 8,0 | - | 15,0 |
| Mn | 0,0 | - | 9,5 |
| Fe | Balance | | |

13. Method of preconditioning according to any of the claims 11 to 12, **characterized in that** welding of the metal deposit (4; 7; 14) comprises a first deposition step and a second consecutive deposition step, separated by a cleaning process

14. Method of preconditioning according to claim 13, **characterized in that** an interpass temperature at the beginnings of the first and second deposition steps is less than 400°C, preferably less than 380°C.

15. Method of preconditioning according to any of the claims 11 to 14, **characterized in that** in the first deposition step a lower metal sub-layer (7a) is deposited that has a thickness in the range of 2 to 4mm, and that in the second deposition step an upper metal sub-layer (7b) is deposited that has a thickness in the range of 2 to 4mm.
